# EUROPÄISCHE PATENTSCHRIFT

(11) **EP 2 387 540 B1**
(45) Veröffentlichungstag und Bekanntmachung des Hinweises auf die Patenterteilung: **29.05.2013**
(21) Anmeldenummer: 09795336.8
(22) Anmeldetag: 11.12.2009
(51) Int. Cl.: B65G 47/84, B67C 3/00, B67C 7/00, B65G 29/00

(54) **FÖRDERELEMENT MIT BEHÄLTERKLAMMER BZW. -CLIP**
CONVEYOR ELEMENT WITH CONTAINER CLAMP OR CONTAINER CLIP
ELEMENT DE CONVOYEUR AVEC PINCE OU CLIP À RÉCIPIENT

(30) Priorität: 15.01.2009 DE 102009005151
(43) Veröffentlichungstag der Anmeldung: 23.11.2011
(73) Patentinhaber: KHS GmbH, 44143 Dortmund (DE)
(72) Erfinder: BODTLÄNDER, Renate, 55452 Guldental (DE)
(86) Internationale Anmeldenummer: PCT/EP2009/008896
(87) Internationale Veröffentlichungsnummer: WO 2010/081512

(56) Entgegenhaltungen:
- WO-A1-03/068643
- DE-A1-102006 017 706

## Beschreibung

Die Erfindung richtet sich auf ein Förderelement mit einen Behälterklammer bzw. -clip nach dem Oberbegriff des Anspruches 1 .

Behälterklammern in derartigen Behälterabfüllanlagen sind in sehr unterschiedlichen konstruktiven Gestaltungen bekannt, sei es als passive Greifelement oder als aktive Klammern, etwa zum Ergrelfen eines Halses von PET-Flaschen, wobei die Erfindung nicht auf diese besondere Anwendung beschränkt ist. Zum Stand der Technik sei en lediglich als Beispiel die DE 10 2005 032 175 A1, DE 20 2005 002 470 U1, DE 20 2006 004 641 U1 oder die.DE 20 2006 018 379 U1 genannt, die einige Behälterklammer- bzw. -clipskonstruktionen zeigen. Die WO 03/068643 A1 offenbart ein Förderelement nach dem Oberbegriff des Anspruchs 1. Aus der US-PS 3 175 702 ist ein Förderer bekannt, bei welchem das Aufnahmeelement um eine Drehachse schwenkbar gelagert ist, wobei auf zwei Selten der Drehachse Zentrierfinger angeordnet sind, die mittel Feder zueinander bzw. hin zur Drehachse zentriert werden. Aus IT 1 296 413 ist vorbekannt, Aufnahmeelemente an einer Fördervorrichtung vorzusehen, welche über ein elastisches Verbindungsstück mit dem Trager verbunden sind.

Weiterhin ist aus der WO 03/068643 A1 eine Behälterklammer bekannt, welche aus einem zweiteiligen Grundkörper besteht, zwischen welchen vertikale Lagerbolzen angeordnet und die miteinander über radial wirkende Federelement verbunden sind. Die beiden Teile des Grundkörpers sind derart gelagert, dass bei der Überschreitung einer gewissen Schwellenkraft in Umfangsrichtung, der radial äußere Teil des Grundkörpers vollständig in Umfangsrichtung weg klappen kann.

Es gibt Anwendungsfälle, bei denen es möglich ist, z.B. bei direkt verblockten Anlagen (Blasmaschine übergibt über mehrere Sterne hinweg Flaschen ohne Pufferstrecke in den Füller), dass es aufgrund von Toleranzen zu einer ungenauen Flaschenübergabe kommen kann, z.B. hervorgerufen durch asynchron laufende Sterne. Je nach Übergabesituation können so starke Kräfte bei Fehlübergabe auftreten, dass es zu Beschädigungen der Anlage kommt, nicht nur, dass die einzelnen Greifer zerstört werden, es kann auch zu größeren Schäden an der Gesamtanlage im Übergabebereich kommen.

Hier setzt die Erfindung an, deren Aufgabe darin besteht, derartige Anlagen durch besondere Klammerkonstruktionen so zu schützen, dass allenfalls der Ausfall einer einzigen Klammer zu beklagen ist, es ansonsten aber nicht zu einer Beschädigung der Anlage kommt.

Mit einer Behälterklammer bzw. -clips der eingangs bezeichneten Art wird die Aufgabe gemäß der Erfindung durch die Merkmale des Anspruchs 1 gelöst.

Mit dieser Sicherungseinrichtung wird erreicht, dass bei Fehlern im System durch entweder zu große Schwenkbereiche oder zu große Krafteinwirkung die einzelne Klammer freigegeben wird und aus ihrer Halterung herausfallen kann, ohne dass die Gesamtanlage Schaden nimmt.

Eine Variante der Ausgestaltung der Behälterklammer nach der Erfindung besteht darin, dass die Länge wenigstens des in Bewegungsrichtung vorne liegenden Armes am Lagerblock so bemessen ist, dass bei Aufbringung eines seitlichen Druckes der Arm am Fixierbolzen vorbeigleitet und vom Fixierbolzen zur Freigabe des Blockes abspringt. Dabei ist es zweckmäßig, wenn beide Arme eine das Abspringen vom Fixierbolzen ermöglichende Länge aufweisen. Zweckmäßig sind die Arme am Lagerblock aus einem elastisch federnden Material gebildet.

Weitere Merkmale, Einzelheiten und Vorteile der Erfindung ergeben sich aufgrund der nachfolgenden Beschreibung sowie anhand der Zeichnung. Diese zeigt in
Fig. 1 eine Unteransicht im Ausschnitt eines Sternes mit drei Klammern in unterschiedlichen Schwenkpositionen,
Fig. 2 eine räumliche Darstellung des Ausschnittes gemäß Fig. 1 sowie in Fig. 3 eine räumliche Unteransicht unter den Stern gemäß Fig. 2.

Ein allgemein mit 1 bezeichneter Transportstern einer Flaschenabfüllanlage ist mit einer Mehrzahl von Behälterklammern bzw. -clipsen, ausgerüstet, wobei in den Figuren jeweils nur drei Klammern 2 dargestellt sind.

Die Klammern 2 weisen einen allgemein mit 3 bezeichneten Lagerblock auf, welcher an einem Lagerzapfen 4, der fester Bestandteil des Transportsternes 1 darstellt, drehbar gelagert ist. Neben den beiden Klammerarmen 5 und 6, die schwenkbar am Lagerblock 3 positioniert sind, und in den dargestellten Beispielen mittels einer Zugfeder 7 zusammengehalten werden, weist der Lagerblock 3 noch zwei außen angeformte, als Arme 8 und 9 ausgebildete Lagerelemente auf, die, vom Lagerblock 3 ausgehend, sich in Richtung der Eingriffsöffnung der Klammerarme 5 und 6 erstrecken.

Diese Lagerarme ruhen in der Normallage auf tellerartigen Haltestegen 10, die an ebenfalls am Transportstern 1 ortsfest befestigten Bolzen 11 angebracht sind, derart, dass die Klammern 2 so unterhalb des Tellers des Sternes gehalten sind.

Um die Klammern auswechseln zu können, bedarf es lediglich des Zusammendrückens der beiden Arme 8 und 9, um dann die Klammer nach unten vom Lagerzapfen 4 abziehen zu können.

Diese Montageart macht sich die Erfindung zunutze, um bei Überschreiten gewisser Beanspruchung der Klammern 2 ein automatisches Abfallen der jeweiligen Klammer vom Transportstern 1 zu bewirken.

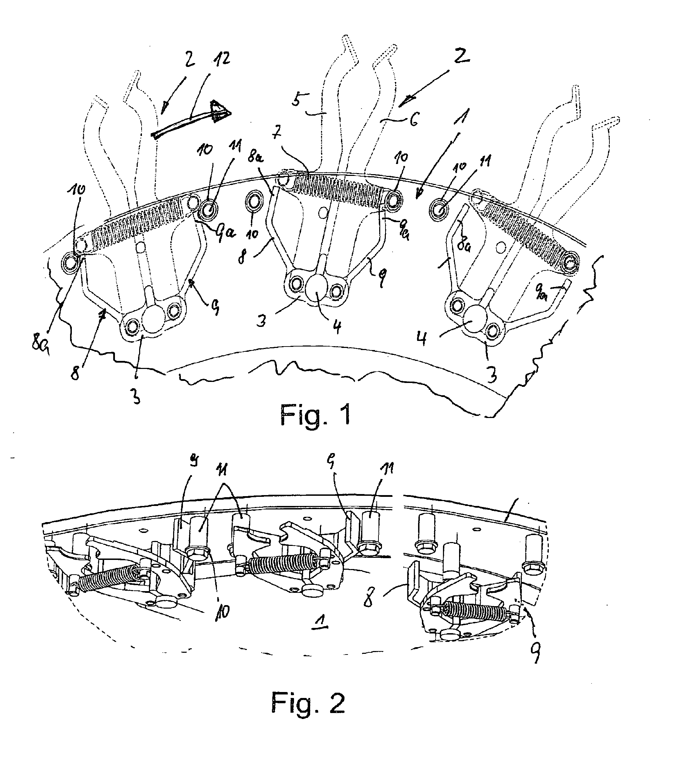

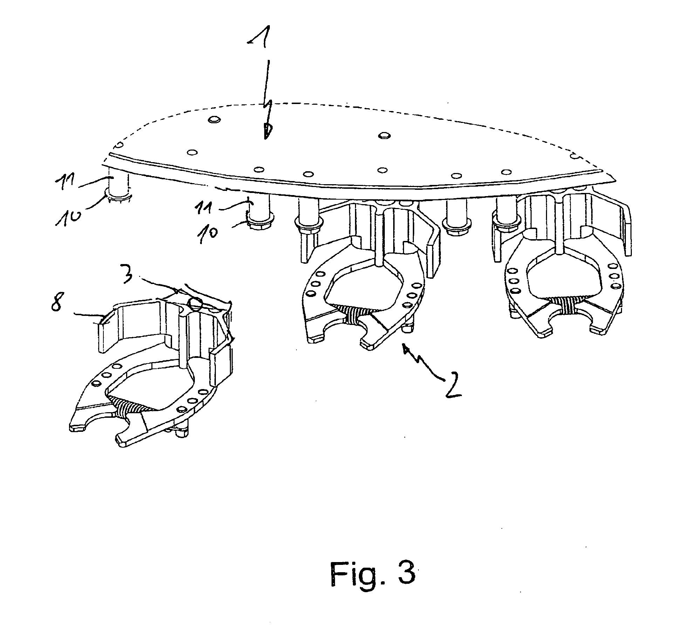

Wie sich z.B. aus Fig. 1 eraibt, ruhen zunächst die freien Enden 8a und 9a der Arme 8 und 9 auf den Haltestegen 10 an den jeweiligen Haltebolzen 11 und halten die Klammer 2 in Position. Wird nun eine Kraft etwa in Richtung des Pfeils 12 in Fig. 1 auf die Klammer 2 ausgeübt, so verschwenkt sie im Drehbolzen 4 in der Weise, dass zunächst das freie Ende 8a des Armes 8 sich von dem Haltesteg 10 löst, der das freie Ende 9a des gegenüberliegenden Armes 9 ist noch in Kontakt mit dem zugeordneten Haltesteg 10. Wird die Kraft weiterhin ausgeübt, ergibt sich die in Fig. 1 rechte Position der jeweiligen Klammer, d.h. beide freien Ende 8a und 9a der Arme 8 bzw. 9 lösen sich vom Haltesteg 10, indem sie am zugeordneten Bolzen 11 vorbeigeglitten sind und geben so die Klammer einschließlich Lagerblock zum Herausfallen frei, was in den Fig. 2 und 3 angedeutet ist.

Natürlich ist das beschrieben Ausführungsbeispiel der Erfindung noch in vielfacher Hinsicht abzuändern, ohne den Grundgedanken zu verlassen. So ist die Erfindung insbesondere nicht auf eine bestimmte Form der Klammern 2 beschränkt, insbesondere auch nicht darauf, ob diese mit Federn ausgerüstet ist oder die Klemmkraft allein aufgrund ihrer Elastizität ausüben kann.

## Patentansprüche

1. Förderelement, beispielsweise ein Transportstern (1), in Behälterabfüllanlagen mit Lager-und Haltevorrichtung (10, 11), sowie Behälterklammer (2) bzw. -clip zur Aufnahme des Halses eines Behälters, Insbesondere einer Flasche, wobei jede Klammer (2) bzw. Clip einen Lagerblock (3) aufweist, welcher an der Unterseite des Förderelementes, an einer dort vorgesehenen Lager- und Haltevorrichtung (10,11,) gehalten wird, wobei der Lagerblock (3) Halteelemente (8,9) aufweist, die beim Überschreiten eines seitlichen Schwenkbereiches bzw. einer seitlichen Krafte inwirkung sich mindestens teilweise von der Lager- und Haltevorrichtung (10,11) lösen, wobei der Lagerblock (3) bzw. die Behälterklammer (2) oder -clip zum Herabfallen freigegeben wird, **dadurch gekennzeichnet, dass** der Lagerblock (3) mit angeformten Armen (8.9) versehen ist die jeweils von einem Haltesteg (10) je an einem weiteren Belzen (11) fixiert sind, wobei die angeformten Arme (8,9) elastisch verformbar bei Überschreiten eines seitlichen Schwenkbereiches ausschnappen oder abknicken und den Lagerblock (3) zum Abfallen von (11) freigeben.

2. Förderelement nach einem der Ansprüche 3,4, **dadurch gekennzeichnet, dass** die angeformten Armen (8,9) eine Verschwächung oder Einkerbung als Sollbruchstelle aufweisen, so dass die angeformten Arme (8,9) elastisch verformbar bei Überschreiten eines seitlichen Schwenkbereiches über diese Sollbruchstelle abknicken und den Lagerblock (3) zum Abfallen von Bolzen (11) freigeben.

3. Förderelement nach einem der Ansprüche 3-5, **dadurch gekennzeichnet, dass** die Länge wenigstens des in Bewegungsrichtung vorne liegenden Armes (8,9) am Lagerblock (3) so bemessen ist, dass bei Aufbringung eines seitlichen Druckes der Arm am Bolzen (11) mit Haltesteg (10) vorbeigleitet und vom Bolzen (11) zur Freigabe des Lagerblockes (3) abspringt.

4. Förderelement nach einem der vorangehenden Ansprüche 3-6, **dadurch gekennzeichnet, dass** beide Arme (8,9) eine das Abspringen vom Bolzen (11) ermöglichende Länge aufweisen.

5. Förderelement nach einem der vorangehenden Ansprüche, **dadurch gekennzeichnet, dass** wenigstens die Arme (8,9) aus einem elastisch federnden Material gebildet sind.

6. Förderelement nach einem der vorangehenden Ansprüche, **dadurch gekennzeichnet, dass das** Förderelement ein umlaufend angetriebener Transportstern (1), eine Behälterbehandlungsmaschine oder eine Band ist.

7. Förderelement nach Anspruch 9, **dadurch gekennzeichnet, dass** die Behälterbehandlungsmaschine eine Füllmaschine ist.

## Claims

1. Conveying element, for example a transport star wheel (1), in container filling installations, comprising a bearing and holding device (10, 11), and a container clamp (2) or container clip for receiving the neck of a container, particularly a bottle, each clamp (2) or clip comprising a bearing block (3) which is held on the underside of the conveying element at a bearing and holding device (10, 11) provided there, the bearing block (3) comprising holding elements (8, 9) which detach at least partially from the bearing and holding device (10, 11) when a lateral pivoting range or a lateral force is exceeded, wherein the bearing block (3) or the container clamp (2) or container clip is released to fall on the ground, **characterised in that** the bearing block (3) is provided with moulded-on arms (8, 9) which are each attached by a holding web (10) to a further bolt (11), wherein the moulded-on arms (8, 9) snap outwards or bend in an elastically deformable manner when a lateral pivoting range is exceeded and release the bearing block (3) to fall from bolts (11).

2. Conveying element according to any one of claims 3 or 4, **characterised in that** the moulded-on arms (8, 9) have a weakening or notch as a desired breaking point so that the moulded-on arms (8, 9) bend via this desired breaking point in an elastically deformable manner when a lateral pivoting range is exceeded and release the bearing block (3) to fall from bolts (11).

3. Conveying element according to any one of claims 3 to 5, **characterised in that** the length at least of the front arm (8, 9) on the bearing block (3) as seen in the direction of movement is such that, when a lateral pressure is applied, the arm slides past the bolt (11) with the holding web (10) and springs away from the bolt (11) to release the bearing block (3).

4. Conveying element according to any one of the preceding claims 3 to 6, **characterised in that** both arms (8, 9) have a length enabling them to spring away from the bolt (11).

5. Conveying element according to any one of the preceding claims, **characterised in that** at least the arms (8, 9) are formed from an elastically flexible material.

6. Conveying element according to any one of the preceding claims, **characterised in that** the conveying element is a transport star wheel (1) that is driven in rotation, a container treatment machine or a belt.

7. Conveying element according to claim 9, **characterised in that** the container treatment machine is a filling machine.

## Revendications

1. Elément de transport, par exemple dispositif de transport en étoile (1), utilisé dans des installations de remplissage de récipients comprenant un dispositif de support et de retenue (10, 11), ainsi que pince (2) ou clip pour récipient servant à recevoir le goulot d'un récipient, en particulier d'une bouteille, sachant que chaque pince (2) ou clip présente un bloc de support (3), lequel est maintenu au niveau du côté inférieur de l'élément de transport au niveau d'un dispositif de support et de retenue (10, 11) prévu à cet endroit, sachant que le bloc de support (3) présente des éléments de retenue (8, 9), qui se détachent au moins en partie du dispositif de support et de retenue (10, 11) lors du dépassement d'une zone latérale de pivotement ou sous l'effet d'une force latérale, sachant que le bloc de support (3) ou la pince (2) pour récipient ou le clip sont libérés pour tomber, **caractérisé en ce que**
le bloc de support (3) est pourvu de bras (8, 9) formés, lesquels sont fixés respectivement par une entretoise de retenue (10) respectivement au niveau d'un autre boulon (11), sachant que les bras (8, 9) formés se détendent ou se plient de manière élastiquement déformable lors du dépassement d'une zone latérale de pivotement et libèrent le bloc de support (3) afin qu'il puisse tomber.

2. Elément de transport selon l'une quelconque des revendications 3, 4, **caractérisé en ce que** les bras (8, 9) formés présentent une zone d'affaiblissement ou une entaille en guise de point destiné à la rupture de sorte que les bras (8, 9) formés se plient sur ce point destiné à la rupture de manière élastiquement déformable lors du dépassement d'une zone latérale de pivotement et libèrent le bloc de support (3) afin qu'il puisse se détacher du boulon (11) et tomber.

3. Elément de transport selon l'une quelconque des revendications 3 à 5, **caractérisé en ce que** la longueur au moins du bras (8, 9) se trouvant à l'avant dans le sens de déplacement est dimensionnée de telle manière sur le bloc de palier (3) que le bras passe devant le boulon (11) avec l'entretoise de retenue (10) lors de l'application d'une pression latérale et se détache du boulon (11) afin de libérer le bloc de palier (3).

4. Elément de transport selon l'une quelconque des revendications précédentes 3 à 6, **caractérisé en ce que** les deux bras (8, 9) présentent une longueur permettant le détachement du boulon (11).

5. Elément de transport selon l'une quelconque des revendications précédentes, **caractérisé en ce qu'**au moins les bras (8, 9) sont formés à partir d'un matériau élastique.

6. Elément de transport selon l'une quelconque des revendications précédentes, **caractérisé en ce que** l'élément de transport est un dispositif de transport en étoile (1) entraîné en rotation, une machine de traitement de récipients ou une bande.

7. Elément de transport selon la revendication 9, **caractérisé en ce que** la machine de traitement de récipients est une remplisseuse.
